Europäisches Patentamt

European Patent Office

Office européen des brevets

(19)

(11) Veröffentlichungsnummer : **0 019 768**
**B1**

(12) **EUROPÄISCHE PATENTSCHRIFT**

(45) Veröffentlichungstag der Patentschrift :
**11.05.83**

(21) Anmeldenummer : **80102513.1**

(22) Anmeldetag : **08.05.80**

(51) Int. Cl.³ : **C 08 L 77/00**, C 08 K 5/34,
C 08 K 3/02

(54) **Flammgeschützte füllstoffhaltige Polyamidformmassen.**

(30) Priorität : **02.06.79 DE 2922663**

(43) Veröffentlichungstag der Anmeldung :
**10.12.80 Patentblatt 80/25**

(45) Bekanntmachung des Hinweises auf die Patenterteilung : **11.05.83 Patentblatt 83/19**

(84) Benannte Vertragsstaaten :
**DE FR GB IT NL**

(56) Entgegenhaltungen :
**DE A 2 551 718**
**DE A 2 740 092**

(73) Patentinhaber : **BASF Aktiengesellschaft
Carl-Bosch-Strasse 38
D-6700 Ludwigshafen (DE)**

(72) Erfinder : **Theysohn, Rainer, Dr.
Bruesseler Ring 38
D-6700 Ludwigshafen (DE)**
Erfinder : **Reimann, Horst, Dr.
Adelheidstrasse 26
D-6520 Worms (DE)**

EP 0 019 768 B1

## Flammgeschützte füllstoffhaltige Polyamidformmassen

Die Erfindung betrifft flammgeschützte Polyamidformmassen mit hoher Langzeitstabilität, die als Flammschutzmittel Melamincyanurat und roten Phosphor sowie Füllstoffe enthalten.

Es ist bekannt, daß der Zusatz von rotem Phosphor zu verstärkten oder gefüllten Polyamiden einen wirksamen Brandschutz ergibt (DE-AS 19 31 387). Roter Phosphor neigt jedoch unter ungünstigen Bedingungen, wie stark erhöhte Temperatur, Feuchtigkeit, alkalische Umgebung oder Sauerstoff zur Bildung von Zersetzungsprodukten, wie Phosphin und Säuren des Phosphors. Schwermetallverunreinigungen fördern bereits in sehr geringen Mengen zusätzlich die Bildung von Zersetzungsprodukten. In Polyamide eingearbeiteter roter Phosphor ist zwar infolge der Umhüllung mit Polymermatrix gegen Thermooxidation geschützt, langfristig kann es jedoch auch hier bei den genannten Bedingungen zur Bildung von Zersetzungsprodukten kommen, insbesondere dann, wenn ein nicht optimal stabilisierter roter Phosphor eingesetzt wurde. Dies ist insofern vom Nachteil, als das bei der Verarbeitung von Granulaten, z. B. im Spritzgußverfahren, sich bildende Phosphin zu Geruchsbelästigungen führen kann und zudem toxisch ist.

Möglichkeiten zur Vermeidung dieser Nachteile liegen zum einen in der Reduzierung des Phosphorgehaltes und zum anderen in der Stabilisierung des eingesetzten roten Phosphors. Bei der Reduzierung des Phosphorgehaltes ist man stark eingeschränkt, da man sehr schnell zu Konzentrationen kommt, bei denen die geforderte Flammschutzwirkung nicht mehr gewährleistet ist. Beim Stabilisieren von rotem Phosphor werden die Phosphorpartikel, gegebenenfalls in Gegenwart von Zuschlagstoffen, zunächst mit einer Polymerumhüllung versehen und dann erst der weiteren Verarbeitung zugeführt. Diese Arbeitsweise bedingt einen zusätzlichen Verfahrensschritt und ist daher aufwendig und kostenintensiv.

Der Erfindung lag die Aufgabe zugrunde, mit einfachen Mitteln die Stabilität von mit rotem Phosphor ausgerüsteten verstärkten Polyamidformmassen zu erhöhen, ohne daß dadurch die guten Flammschutzeigenschaften beeinträchtigt werden.

Diese Aufgabe wird gelöst durch eine Formmasse, die neben Polyamid, Füllstoffen und rotem Phosphor noch Melamincyanurat enthält.

Gegenstand der Erfindung sind demzufolge thermoplastische Formmassen, die enthalten :

1. 100 Gewichtsteile eines Polyamids
2. 10-100 Gewichtsteile eines anorganischen Füllstoffs
3. 1-12 Gewichtsteile roter Phosphor·
4. 1-40 Gewichtsteile Melamincyanurat, sowie gegebenenfalls
5. übliche Hilfs- und Zusatzstoffe.

Melamincyanurat als Flammschutzmittel für Polyamide ist in der DE-OS 27 40 092 beschrieben. Zwar werden darin auch Glasfasern und Füllstoffe erwähnt, die in den Polyamidformmassen enthalten sein können ; entsprechende Untersuchungen haben jedoch ergeben, daß z. B. die Kombination aus glasfaserverstärktem Polyamid 6,6 und 1 bis 20 Gewichtsprozent Melamincyanurat, wohl aufgrund des Dochteffektes des Verstärkerfüllstoffs, keine flammhemmenden Eigenschaffen aufweist. Es war daher überraschend, daß der Zusatz von Melamincyanurat bei glasfaserhaltigen Polyamiden die Flammschutzwirkung von rotem Phosphor verstärkt und insbesondere die Langzeitstabilität erhöht.

Polyamide im Sinne der Erfindung sind vorzugsweise gesättigte, lineare Homopolyamide, wie z. B. Polycaprolactam (Polyamid-6), Polyhexamethylenadipinsäureamid (Polyamid-6,6), Polyhexamethylensebazinsäureamid, Polylaurinlactam, Polyundecanamid ; ferner Homo- und Copolyamide, die unter Verwendung von Adipinsäure, Acelainsäure, Sebazinsäure, Dodecandisäure, Terephthalsäure einerseits und Hexamethylendiamin, Trimethylhexamethylendiamin, Bis-(4-aminocyclohexyl)-methan, 2,2-Bis-(4'-aminocyclohexyl)-propan andererseits hergestellt werden ; sowie Copolyamide, die durch Polykondensation von Lactamen zusammen mit den oben genannten Dicarbonsäuren und Diaminen erhalten werden ; außerdem Mischungen aus den genannten Polyamiden.

Als anorganische Füllstoffe kommen vorzugsweise Glasfasern aus E, A oder C-Glas in Frage, die mit einer Schlichte und einem Haftvermittler ausgerüstet sein können. Die Fasern können einen Durchmesser zwischen 6 und 20 $\mu$m aufweisen, die mittlere Glasfaserlänge im Spritzgußteil liegt vorzugsweise zwischen 0,08 und 0,5 mm. Als weitere Füllstoffe, die ebenfalls mit einem Haftvermittler beschichtet sein können, kommen Silikate, wie Talkum, Glimmer, Kaolin, cal. Kaolin, Zirkonsilikat in Frage, ferner Glaskugeln, Wollastonit, Quarzmehl und Kreide sowie Mischungen von Glasfasern mit Füllstoffen. Die Füllstoffe werden in Mengen von 10-100, vorzugsweise von 20 bis 80 Gewichtsteilen, bezogen auf 100 Gewichtsteile Polyamid, eingesetzt.

Zur Brandschutzausrüstung wird der rote Phosphor vorzugsweise in Mengen von 1 bis 8 Gewichtsteilen, insbesondere 2 bis 5 Gewichtsteilen, bezogen auf 100 Gewichtsteile Polyamid, eingesetzt. Er kann in handelsüblichen, auch bereits anderweitig vorstabilisierten Qualitäten verwendet werden. Er kann oberflächlich mit einem Polymeren oder Oligomeren beschichtet sein, aber auch mit niedermolekularen flüssigen Substanzen wie Siliconöl, Paraffinöl oder Ester der Phthalsäure oder Adipinsäure. Außerdem sind Konzentrate von rotem Phosphor z. B. in Caprolactam oder Polyamid geeignet. Die mittlere Größe der in Kunststoff verteilten Phosphorpartikel soll bevorzugt zwischen 0,000 1 und 0,5 mm, insbesondere zwischen 0,001 und 0,2 mm Durchmesser liegen.

Melamincyanurat im Sinne der Erfindung ist das Umsetzungsprodukt von Melamin und Cyanursäure im Molverhältnis von vorzugsweise etwa 1 : 1. Es kann aus Melamin und Cyanursäure hergestellt werden, wie es in der DE-OS 27 40 092 beschrieben ist, aber auch handelsübliche Qualitäten sind einsetzbar. Auch substituierte Melamincyanurate sind wirksam. Das Melamincyanurat soll bevorzugt in Korngrößen von 0,000 1 bis 2 mm, insbesondere 0,001 bis 0,5 mm verwendet werden. Das Produkt kann eine zusätzliche Oberflächenbehandlung z. B. mit Gleit- oder Schmiermitteln oder z. B. Silanen aufweisen. Es wird in Mengen von 1-40, vorzugsweise von 5 bis 30 Gewichtsteilen, bezogen auf 100 Gewichtsteile Polyamid, eingesetzt.

Unter Zusatzstoffen werden hauptsächlich Stabilisatoren gegen Licht, Wärme und Hydrolyse verstanden, weiterhin Schmier-, Gleit- und Entformungsmittel sowie Farbpigmente.

Zur Herstellung der erfindungsgemäßen Mischungen werden die Zusatzstoffe nach bekannten Methoden auf Extrudern oder anderen geeigneten Knet- und Mischvorrichtungen in die Polyamidschmelze eingearbeitet, wie es z. B. in der US-PS 33 04 282 beschrieben ist. Melamincyanurat kann entweder direkt in die Schmelze zugegeben werden, es kann aber auch zuerst mit dem roten Phosphor abgemischt oder vor der Einarbeitung auf Kunststoffgranulat aufgebracht werden. Eine bevorzugte Ausführungsform ist die Verwendung eines roten Phosphors, auf den Melamincyanurat durch Reaktion von Melamin und Cyanursäure in wäßrigem Medium aufgefällt wurde.

Die im Beispiel genannten Teile und Prozente beziehen sich auf das Gewicht.

Beispiel

Um die Wirksamkeit des Melamincyanurats in bezug auf die Zersetzung des Phosphors und Flammfesteigenschaften zu überprüfen, wurden folgende Versuche durchgeführt: Polyamid 6,6 mit einem K-Wert von 71 (nach Fikentscher, Cellulosechemie *13*, 1932, Seite 58) wurde auf einem Extruder bei Temperaturen von 270 bis 290 °C aufgeschmolzen. Glasfasern in Form von 6 mm langen Schnittfasern sowie Flammschutzmittel gemäß Tabelle 1 wurden über eine Öffnung, die sich stromabwärts befindet, zugegeben.

Die Menge der eingearbeiteten Glasfasern betrug 50 Teile bezogen auf 100 Teile Polyamid. Die homogene Mischung wurde durch Düsen ausgepreßt, als Stränge abgezogen, gekühlt und granuliert.

Tabelle 1

Zusammensetzung der Proben

| Probe | Flammschutzmittel aus : (Teile, bezogen auf 100 Teile Polyamid) |
|---|---|
| 1 | 5 T. roter Phosphor + 17 T. Melamincyanurat |
| 2 | 5 T. roter Phosphor — |
| 3 | — 17 T. Melamincyanurat |
| 4 | 22 T. eines Produktes bei dem 17 T. Melamincyanurat auf 5 T. roten Phosphor bei 100 °C in wäßrigem Medium aufgefällt wurden. |

Aus den Granulaten wurden Normkleinstäbe in den Abmessungen 2 × 6 × 50 mm spritzgegossen. Jeweils 100 dieser Normkleinstäbe wurden im spritzfrischen Zustand in einen gasdichten Glaskolben gegeben und 5 % destilliertes Wasser, bezogen auf die Gesamtmasse der Formkörper hinzugefügt, der Kolben mit Sauerstoff gespült und dann auf 0,6 bar evakuiert. Die sich im Kolben bildende Menge an Phosphin wurde mittels Trägerröhrchen (Typ Phosphorwasserstoff 50/a der Fa. Trägerwerke AG, Lübeck) bestimmt. Nach jeder Messung wurde der Kolben zuerst mit Stickstoff, dann mit Sauerstoff gespült und auf 0,6 bar evakuiert. Die Summe der nach 20 Tagen gemessenen Phosphingehalte diente als Richtwert für die Beurteilung der stabilisierenden Wirkung des verwendeten Melamincyanurats (Ergebnisse in Tabelle 2). Die Brandprüfung erfolgte an spritzgegossenen Prüfkörpern in den Abmessungen 126 × 13 × 1, 6 mm in Anlehnung an die Prüfvorschrift UL 94.

(Siehe die Tabelle 2, Seite 4)

0 019 768

Tabelle 2

Flammschutzeigenschaften und Phosphingehalte

| Probe | Ergebnis der Brandprüfung | Phosphingehalt in ppm |
|-------|---------------------------|------------------------|
| 1 | V0 | 65 |
| 2 | V2 | 180 |
| 3 | brennt, nicht klassifiziert | — |
| 4 | V0 | 42 |

**Anspruch**

Thermoplastische Formmassen, enthaltend

1. 100 Gewichtstelle eines Polyamids,
2. 10-100 Gewichtsteile eines anorganischen Füllstoffs,
3. 1-12 Gewichtsteile roten Phosphor,
4. 1-40 Gewichtsteile Melamincyanurat, sowie gegebenenfalls
5. übliche Hilfs- und Zusatzstoffe.

**Claim**

A thermoplastic molding composition which contains

1. 100 parts by weight of a nylon
2. 10-100 parts by weight of an inorganic filler
3. 1-12 parts by weight of red phosphorus and
4. 1-40 parts by weight of melamine cyanurate, with or without
5. conventional assistants and additives.

**Revendication**

Matière à mouler thermoplastique contenant :

1. 100 parties en poids d'un polyamide,
2. 10-100 parties en poids d'une charge inorganique
3. 1-12 parties en poids de phosphore rouge
4. 1-40 parties en poids de cyanurate de mélamine, ainsi qu'éventuellement
5. des auxiliaires et additifs usuels.

4